## Europäisches Patentamt

## European Patent Office

## Office européen des brevets

(19)

(11) Veröffentlichungsnummer: **0 206 359**
**B1**

(12) **EUROPÄISCHE PATENTSCHRIFT**

(45) Veröffentlichungstag der Patentschrift:
27.09.89

(51) Int. Cl.⁴: **G 01 S 3/10**, G 01 S 3/14,
G 01 S 3/32

(21) Anmeldenummer: 86109357.3

(22) Anmeldetag: 28.04.83

(60) Veröffentlichungsnummer der früheren Anmeldung
nach Art. 76 EPÜ: 0108094

(54) Peilanordnung.

(30) Priorität: 13.08.82 DE 3230148
29.04.82 DE 3215964

(43) Veröffentlichungstag der Anmeldung:
30.12.86 Patentblatt 86/52

(45) Bekanntmachung des Hinweises auf die Patenterteilung:
27.09.89 Patentblatt 89/39

(84) Benannte Vertragsstaaten:
DE FR GB

(56) Entgegenhaltungen:
US-A- 2 361 436
US-A- 3 623 116
US-A- 4 050 072
US-A- 4 207 572

IRE, TRANSACTIONS ON ANTENNAS AND
PROPAGATION, Band 10, November 1962, Seiten
686-691, New York, US; G. EVANS; "The
crossed-spaced-loop direction-finder aerial"

(73) Patentinhaber: Licentia Patent-Verwaltungs-GmbH,
Theodor-Stern-Kai 1, D-6000 Frankfurt/Main 70 (DE)

(72) Erfinder: Mönich, Gerhard, Dr., Ritterfelddamm 95a,
D-1000 Berlin 22 (DE)

(74) Vertreter: Schulze, Harald Rudolf, Dipl.-Ing. et al,
Licentia Patent-Verwaltungs-GmbH
Theodor-Stern-Kai 1, D-6000 Frankfurt/Main 70 (DE)

## Beschreibung

Die Erfindung betrifft eine Peilanordnung zur Ermittlung der Einfallsrichtung einer elektromagnetischen Welle auf Schiffen.

Die Peilung elektromagnetischer Wellen ist auf Schiffen besonders erschwert durch die in geringer Entfernung von den Peilantennen befindlichen metallischen Schiffsaufbauten und Masten. Gebräuchliche Peilanordnungen, wie z.B. gekreuzte Adcocks oder Kreuzrahmenantennen liefern auf Schiffen stark verfälschte Peilergebnisse. Die Peilfehler sind dabei stark abhängig von Frequenz und Einfallsrichtung der gepeilten Welle und besonders ausgeprägt für quer zur Schiffslängsachse einfallende Wellen, für welche die Peilergebnisse sogar mehrdeutig werden können.

In «IRE Transactions on Antennas and Propagation», Nov. 1962, S. 686 bis 691, ist ein Peilantennensystemen zur Verringerung der Peilfehler auf Schiffen beschrieben, welches zwei feststehende, unter 45° gekreuzte Doppelrahmenantennen aufweist. Für jeden Doppelrahmen wird aus den beiden Einzelrahmenantennen eine Summen- und eine Differenzspannung gewonnen. Durch Anlegen der beiden Differenzspannungen an die gekreuzten Ablenksysteme einer Kathodenstrahlröhre kann ein allerdings noch vierdeutiger Peilwinkel abgelesen werden. Die Eindeutigkeit der Peilung kann erzielt werden, indem für einen oder beide Doppelrahmen ein Vorzeichen-Vergleich zwischen der Summen- und der Differenzspannung durchgeführt wird. Hierzu werden die Summen- und die Differenzspannung eines Doppelrahmens einer weiteren Kathodenstrahlröhre zugeführt.

Der Erfindung liegt die Aufgabe zugrunde, eine Peilanordnung auf Schiffen anzugeben, welche eine Verringerung der Peilfehler ermöglicht.

Die Erfindung ist im Patentanspruch 1 beschrieben. Die Unteransprüche enthalten vorteilhafte Ausgestaltungen und Weiterbildungen der Erfindung.

Die Erfindung ist nachfolgend unter Bezugnahme auf die Abbildungen noch veranschaulicht. Dabei zeigt:

Fig. 1 eine Störsituation auf einem Schiff
Fig. 2 eine Doppelrahmenanordnung
Fig. 3A und Fig. 3B die mit dieser Doppelrahmenanordnung erzielten Richtdiagramme
Fig. 4 eine zweite Doppelrahmenanordnung
Fig. 5A und Fig. 5B die zugehörigen Richtdiagramme
Fig. 6 die Ausführung eines Kreuzrahmenpeilers
Fig. 7 eine erfindungsgemäße Peilanordnung mit einem Sichtgerät
Fig. 8 eine besonders vorteilhafte Ausführungsform eines solchen Aufbaus
Fig. 9 einen Aufbau mit zwei gekreuzten Doppelrahmen.

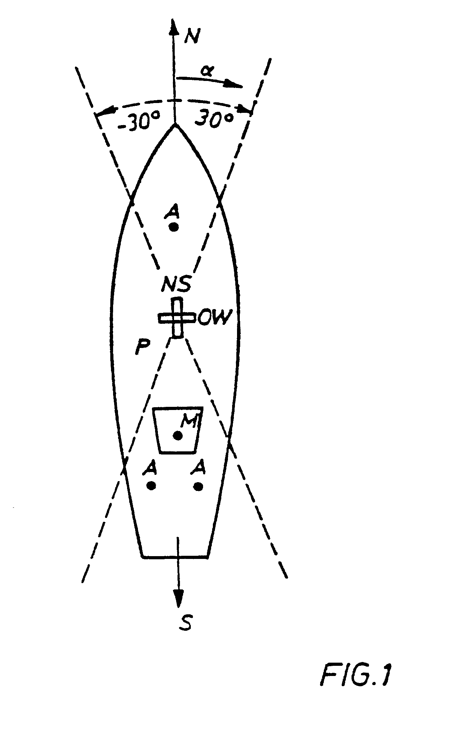

Die Längsachse des in Fig. 1 skizzierten Schiffskörpers sei nach Norden ausgerichtet. Die Peilantenne P ist annähernd in Schiffsmitte angeordnet. In der Längsachse des Schiffes befinden sich noch eine weitere Antenne A und ein Mast M sowie symmetrisch zur Schiffsachse im Heck zwei weitere Antennen A. Die Antennen und der Mast stellen starke Rückstreuer dar, die eine Peilung einer in einem Sektor von z.B. ± 30°C Abweichung von der Schiffslängsachse einfallenden Welle immer mit einem gewissen, tragbaren Fehler beaufschlagen. Mit herkömmlichen Schiffspeilern sind aber besonders Peilungen, die einen Azimutwinkel außerhalb dieses Bereich ergeben, mit einem starken Fehler behaftet, da das rückgestreute Feld im allgemeinen zumindest eine der beiden für die Peilung herangezogenen Spannung OW oder NS stark verfälscht. In diesem Bereich bringt die vorliegende Erfindung eine erhebliche Verringerung des Peilfehlers.

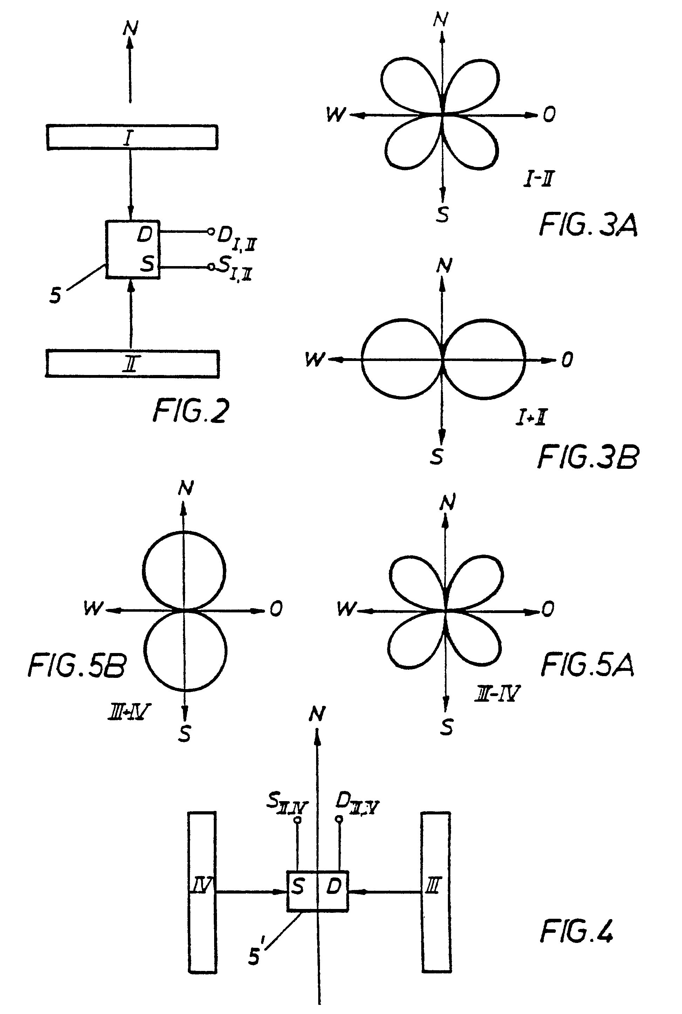

In Fig. 2 ist die Doppelrahmen-Antennenanordnung gemäß einem merkmal der Erfindung skizziert. Die beiden Einzelrahmen I, II weisen bereits jeder für sich ein Diagramm mit einer Nullstelle in Nord/Süd-Richtung (= Schiffslängsachse) auf. Eine Kombination der beiden Diagramme durch additive Überlagerung der Antennenspannungen der beiden Rahmen I und II zu einer Summenspannung $S_{I,II}$ ergibt damit wiederum ein Diagramm mit einer Nullstelle nach norden und Süden. Die Form dieses Diagramms ist in Fig. 3B skizziert. Damit liegt bereits eine Peilspannung vor, die dem Empfang über ein Richtdiagramm mit einer Nullstelle in Richtung der störenden Rückstreuer entspricht. Gleichzeitig zu der Summenspannung $S_{I,II}$ wird aus den Antennenspannungen der beiden Rahmen I und II auch die Differenzspannung $D_{I,II}$ durch subtraktion der beiden Antennenspannungen gebildet. Die Subtraktion der beiden Spannungen entspricht der Überlagerung der beiden Diagramme zu einem neuen Diagramm, wie es in Fig. 3A skizziert ist, das sowohl in Nord/Süd-Richtung als auch in Ost/West-Richtung Nullstellen aufweist. Mit der Differenzspannung $D_{I,II}$ liegt eine zweite peilspannung vor, die dem Empfang über ein Diagramm entspricht, das in Richtung der störenden Rückstreuer eine Nullstelle aufweist und im übrigen Bereich von dem Verlauf des Diagramms nach Fig. 3B abweicht.

Man erhält für die Antennenspannung eines Einzelrahmens

$$U = h_{eff} \cdot \sin \alpha$$

mit $h_{eff}$ als effektiver Antennenhöhe und $\alpha$ als Einfallswinkel einer Welle. Berücksichtigt man die Phasenverschiebung gegenüber dem Zentrum der Gesamtantenne (im allgemeinen der Trägermast oder die Hilfsantenne), dann erhält man

$$U_I = h_{eff} \cdot \sin \alpha \cdot e^{+j\beta\frac{b}{2} \cdot \cos \alpha}$$

$$U_{II} = H_{eff} \cdot \sin \alpha \cdot e^{-j\beta\frac{b}{2}\cos \alpha}$$

Dabei ist b der Abstand der beiden Rahmenantennen und $\beta = \dfrac{\omega}{c} = \dfrac{2\pi}{\lambda}$ die Ausbreitungskonstante einer elektromagnetischen Welle.

Bei Bildung von Summe und Differenz ergibt sich:

$$S_{I,II} = U_I + U_{II} =$$

$$= h_{eff} \cdot \sin \alpha \cdot 2 \cdot \cos (\beta \frac{b}{2} \cos \alpha)$$

$$D_{I,II} = U_I - U_{II} =$$

$$= h_{eff} \cdot \sin \alpha \cdot 2j \sin (\beta \frac{b}{2} \cos \alpha).$$

Bei elektrisch kleiner Basis $\beta \cdot \frac{b}{2} \ll 90°$ gilt:

$$\cos (\beta \frac{b}{2}) \approx 1 \quad \sin (\beta \frac{b}{2}) \approx \beta \frac{b}{2}$$

und man erhält für die Summenspannung

$$S_{I,II} \approx 2 \, h_{eff} \cdot \sin \alpha$$

also das bekannte Doppelkreis-Diagramm, und für die Diferenzspannung

$$D_{I,II} \approx j \cdot h_{eff} \cdot \beta \cdot b \cdot \sin \alpha \cos \alpha$$

das Kleeblatt-Diagramm.

Die Differenzspannung unterscheidet sich von der Summenspannung wesentlich darin, daß sie den Faktor jβ enthält, also um 90° phasenverschoben und linear frequenzabhängig ist.

Dieser Faktor wird nun der Summenspannung durch das frequenzabhängige Amplitudenglied 22 und das 90°-Phasenglied 23 ebenfalls aufgeprägt und damit eine amplituden- und phasenbeeinflußte Spannung S' erzeugt. Differenzspannung D und Summenspannung S' verhalten sich dann wie $\frac{D}{S'} = C \cdot \cos \alpha$. Die Konstante C und damit das Spannungsverhältnis D/S' sind frequenzunabhängig und können somit vorteilhafterweise an die Peilspannungseingänge OW, NS eines gebräuchlichen Watson-Watt-Sichtpeilgerätes 24 angeschlossen werden. Zur Auswertung der Anzeige durch einen Beobachter ist es vorteilhaft, wenn das Sichtgerät eine zusätzliche Skala aufweist, die für die Peilung mit Summen- und Differenzspannung des Doppelrahmens proportional α geteilt ist.

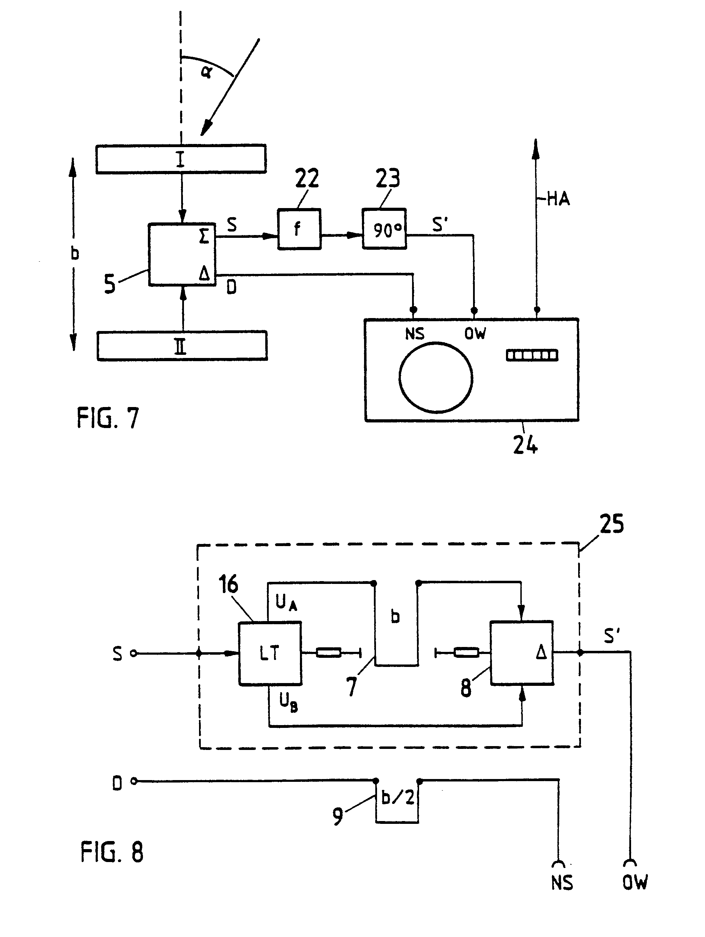

Gemäß einer besonders vorteilhaften Ausführung sind das frequenzproportionale Amplitudenglied und das 90°-Phasenglied durch ein in Fig. 8 gezeigtes frequenzabhängiges Dämpfungsglied 25 realisiert. Die am Eingang des Dämpfungsglieds anliegende Summenspannung S wird durch einen Leistungsteiler 6 in zwei gleich große und gleichphasige Signalanteile $U_A$ und $U_B$ aufgespalten mit $U_A = U_B = K1 \cdot S$. In dem Signalweg der Spannung $U_A$ ist eine Verzögerungsleitung 7 angeordnet, deren Länge b dem Abstand der Rahmenantennen I, II entspricht. Die beiden Signalwege werden anschließend in einem differenzbildenden Glied 8 wieder zusammengefaßt, welches die Differenzspannung S' bildet. Diese ergibt sich zu

$$S' = K2 \cdot (U_A \cdot e^{j\beta b} - U_B)$$

$$= K1 \cdot K2 \cdot S \, (e^{j\beta b} - 1)$$

$$= K1 \cdot K2 \cdot S \cdot e^{j\beta \frac{b}{2}} \left( e^{j\beta \frac{b}{2}} - e^{-j\beta \frac{b}{2}} \right)$$

$$= K1 \cdot K2 \cdot S \cdot e^{j\beta \frac{b}{2}} \cdot 2 \cdot j \cdot \sin \beta \frac{b}{2}$$

Für eine kleine Antennenbasis ist wie bereits weiter vorne angenommen $\beta \cdot \frac{b}{2}$ klein gegen 90°. Dann gilt wieder

$$\sin \beta \frac{b}{2} \approx \beta \frac{b}{2}$$

womit sich für die amplituden- und phasenbeeinflußte Summenspannung S' mit

$$S' = K1 \cdot K2 \cdot S \cdot j \cdot \beta \cdot b \cdot e^{j\beta \frac{b}{2}}$$

ein ebenso wie bei der Differenzspannung D frequenzproportionaler Verlauf ergibt. Die Konstanten K1 und K2 hängen von den Wellenwiderständen der einzelnen Leitungen ab und haben z.B. bei Verwendung einheitlicher Wellenwiderstände die Werte K1 = K2 = $1/\sqrt{2}$. Der Phasenunterschied $\beta \cdot \frac{b}{2}$ von S' gegenüber D wird durch eine Umwegleitung 9 im Signalweg der Differenzspannung D mit einer dem halben Antennenabstand entsprechenden Länge $\frac{b}{2}$ kompensiert. Das differenzbildende Glied 8 ist vorteilhafterweise ein als Vektoraddierer geschalteter Leistungsteiler.

Diese vorstehend beschriebene Anordnung läßt sich günstigerweise durch einen zweiten Doppelrahmen mit Rahmenantennen III, IV zu einer gekreuzten Peilantenne erweitern. Durch Zusammenschaltung der beiden Doppelrahmen zu einer gekreuzten Peilantenne läßt sich in dem Winkelbereich in der Nähe der Schiffslängsachse, wo die Peilung mit der vorstehend beschriebenen Auswertung der Summen- und Differenzspannungen des ersten Rahmens aufgrund der geringen Empfindlichkeit in diesem Bereich schwierig ist, eine Peilung in üblicher Weise durchführen. Für die Peilung in diesem Winkelbereich funktioniert die gekreuzte Antenne im Rahmen der durch die Störer bedingten physikalischen Grenzen erfahrungsgemäß recht gut.

Gemäß einer vorteilhaften Weiterbildung der Erfindung werden auch die Antennenspannungen der Rahmenantennen III, IV des zweiten Doppelrahmens voneinander subtrahiert. Dies entspricht einer Überlagerung zweier Diagramme zu einem Diagramm, wie es in Fig. 5A skizziert ist, das wiederum eine Nullstelle in Nord/Süd-Richtung aufweist und im übrigen von dem Diagramm des ersten Doppelrahmens nach Fig. 3B verschieden ist.

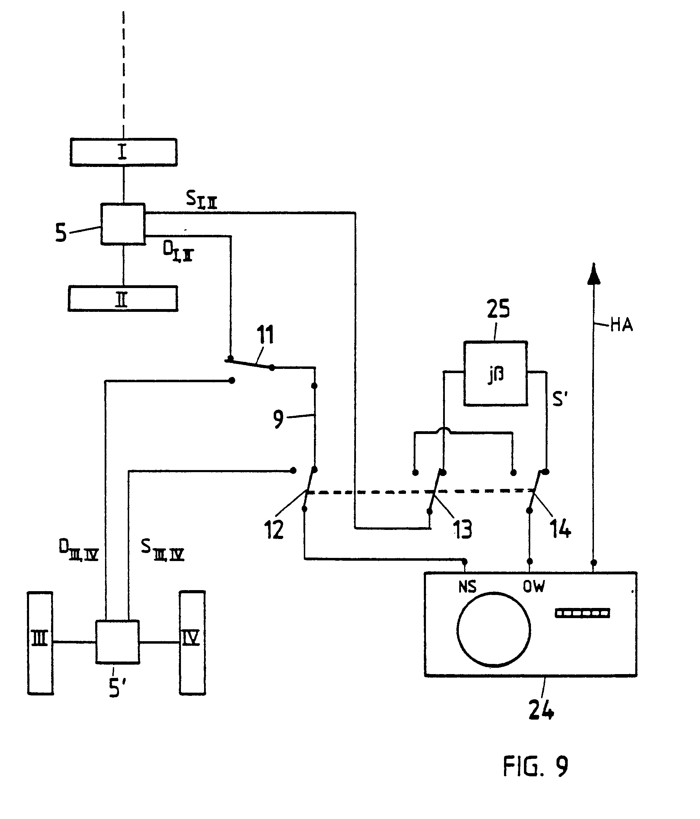

Besonders vorteilhaft ergibt sich damit eine in Fig. 9 skizzierte Anordnung mit zwei gekreuzten Doppelrahmen. Der erste Doppelrahmen liefere in der vorstehend beschriebenen Weise eine frequenzproportionale Summen- und Differenzspannung. Bei dem zweiten, aus den Antennen III und IV aufgebauten Doppelrahmen wird in einem weiteren Summe-Differenz-Glied 5' gleichfalls eine Differenzspannung gebildet, die anstelle der Differenzspannung des ersten Doppelrahmens an den NS-Peilspannungseingang des Peilsichtgeräts angeschlossen werden kann. Über Schaltmittel 11 kann wahlweise eine der beiden Differenzspannungen an das Sichtgerät angeschlossen werden.

Über weitere Schaltmittel 12 kann anstelle einer der Differenzspannungen der Summenausgang des Gliedes 5' direkt, d.h. ohne Zwischenschaltung der Umwegleitung 9, mit dem NS-Eingang des Sichtgeräts verbunden werden. Gleichzeitig wird über Schaltmittel 13, 14 das frequenzabhängige Dämpfungsglied 5 im Signalweg der Summenspannung des ersten Doppelrahmens überdrückt, so daß dieselbe Anordnung auch als gewöhnlicher Kreuzrahmenpeiler betrieben werden kann. Die Seitenkennung erfolgt in bekannter Weise über eine Hilfsantenne HA.

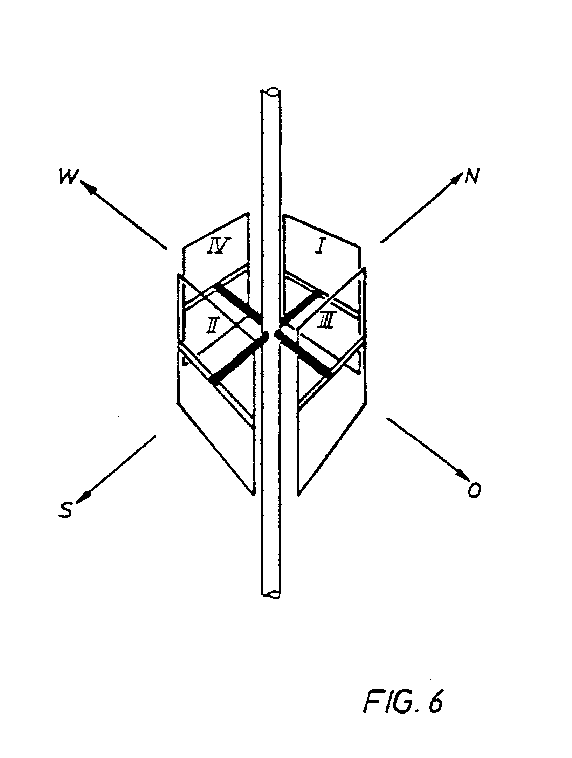

Fig. 6 zeigt die Antennenanordnung in der besonders vorteilhaften Ausführungsform mit vier Rahmenantennen um einen Mast, die auch vom Watson-Watt-Prinzip her schon bekannt ist. Die Erfindung ermöglicht es also, mit einer besonders einfachen Antennenanordnung, die zudem auch noch für die Peilung nach dem gebräuchlichen Watson-Watt-Prinzip erlaubt, eine wesentliche Verbesserung des Peilfehlers über einen weiten Winkelbereich zu erzielen.

Die Bildung der Differenzspannung aus den Antennenspannungen der Rahmenantennen eines Doppelrahmens ist an sich bekannt und beispielsweise in der DE-PS 711 826 beschreiben. Besonders vorteilhaft für die Differenzbildung ist die Verwendung von Summe-Differenz-Gliedern, die in umgekehrter Signalrichtung als Leistungsteiler funktionieren, da hierbei Summen- und Differenzspannung auf einfache Weise gleichzeitig gebildet werden und die einzelnen Anschlußtore voneinander entkoppelt sind.

Eine günstige Ausführungsform sieht vor, die Rahmenantennen über Transformatoren an die Summe-Differenz-Glieder anzuschließen. Dadurch ergibt sich die vorteilhafte Möglichkeit, durch Aufwärts-Transformieren der Antennenspannungen die Empfindlichkeit der Rahmenantennen bei tiefen Frequenzen zu verbessern und die starke Frequenzabhängigkeit der Rahmenantennen durch das gegenläufige Frequenzverhalten der Transformatoren in gewissem Umfang auszugleichen.

**Patentansprüche**

1. Peilanordnung zur Ermittlung der Einfallsrichtung einer elektromagnetischen Welle auf einem Schiff, mit

— einem Sichtpeilgerät (24) mit zwei gekreuzten Ablenksystemen zugeordneten Peilspannungseingängen

— einer Doppelrahmen-Antennenanordnung aus zwei ortsfest auf dem Schiff montierten Rahmenantennen (I, II), die parallel zueinander ausgerichtet sind und die sich in einem vorgegebenen Abstand gegenüberliegen

— Einrichtungen (5) zur Zusammenfassung der Antennenspannungen der beiden Rahmenantennen zu einer Summen- und einer Differenzspannung dadurch gekennzeichnet, daß

— die beiden Rahmenantennen (I, II) jeweils senkrecht bezüglich der Schiffslängsachse ausgerichtet sind, so daß jeweils eine Nullstelle des der Summenspannung (S) und des der Differenzspannung (D) zugeordneten Richtdiagramms der Doppelrahmen-Antennenanordnung permanent auf der Schiffslängsachse liegt,

— in den Signalweg der Summenspannung (S) ein die Signalamplitude frequenzproportional beeinflussendes Amplitudenglied (22) und ein 90°-Phasenglied (23) eingefügt sind,

— die amplituden- und phasenbeeinflußte Summenspannung (S') und die Differenzspannung (D) jeweils an einen der Peilspannungseingänge des Sichtpeilgeräts angelegt sind.

2. Peilanordnung nach Anspruch 1, dadurch gekennzeichnet, daß für das Amplitudenglied (2) und das Phasenglied (3) ein frequenzabhängiges Dämpfungsglied (25) vorgesehen ist, welches einen Leistungsteiler (6), der die Summenspannung (S) in zwei gleiche Signalanteile auf zwei Signalwege aufteilt, eine dem Abstand (b) der beiden Rahmenantennen (I, II) entsprechende Verzögerungsleitung (7) in einem der Signalwege sowie ein Differenzglied (8), das die beiden Signalanteile wieder zusammenfaßt und deren Differenz als amplitudenbeeinflußte und 90° phasenverschobene Summenspannung (S') abgibt, aufweist, und daß im Signalweg der Differenzspannung (D) eine Umwegleitung (9) mit einer dem halben Antennenabstand entsprechenden Länge (b/2) angeordnet ist.

3. Peilanordnung nach Anspruch 1 oder 2, dadurch gekennzeichnet, daß ein zweiter Doppelrahmen vorhanden ist, dessen beide Rahmenantennen (III, IV) senkrecht zu den Rahmenantennen (I, II) des ersten Doppelrahmens ausgerichtet sind, und daß die Antennenspannungen der beiden Rahmenantennen dieses zweiten Doppelrahmens gleichfalls zu einer weiteren Summenspannung und einer weiteren Differenzspannung zusammengefaßt sind.

4. Peilanordnung nach Anspruch 3, gekennzeichnet durch Schaltmittel (11) zum wahlweisen Anschluß einer der beiden Differenzspannungen an das Sichtpeilgerät.

5. Peilanordnung nach Anspruch 3 oder 4, gekennzeichnet durch weitere Schaltmittel (12, 13, 14) zum Umschalten auf normale Watson-Watt-Peilung mit den gekreuzten Doppelrahmen durch direkten Anschluß der Summenspannung ($S_{I, II}$) des ersten Doppelrahmens und der aus den Antennenspannungen der Einzelantennen des zweiten Doppelrahmens gebildeten zweiten Summenspannung ($S_{III, IV}$) an die Peilspannungseingänge des Sichtpeilgeräts.

6. Peilanordnung nach einem der Ansprüche 1 bis 5, dadurch gekennzeichnet, daß das Sichtgerät (24) eine zusätzliche, auf die Peilung mit Summen- und Differenzspannung des Doppelrahmens geeichte Skala aufweist.

7. Peilanordnung nach einem der Ansprüche 1 bis 6, dadurch gekennzeichnet, daß zur seiteneindeutigen Ermittlung des Peilwinkels eine Hilfsantennenspannung vorhanden ist.

**Claims**

1. Direction-finding arrangement for the determination of the direction of incidence of an electromagnetic wave on a ship with
— a visual direction-finding device (24) with direction-finding voltage inputs associated with two crossed deflecting systems,
— a double frame aerial arrangement of two frame aerials (I, II), which are mounted in fixed location on the ship, are oriented each parallelly to the other and lie each opposite the other at a present spacing,
— equipments (5) for the combination of the aerial voltages of both the frame aerials into a sum voltage and a difference voltage, characterised thereby, that
— both the frame aerials (I, II) are each oriented perpendicularly with respect to the longitudinal axis of the ships so that a zero position of each directional diagram, which is respectively associated with the sum voltage (S) and the difference voltage (D), of the double frame aerial arrangement lies permanently on the longitudinal axis of the ship,
— an amplitude member (22) influencing the signal amplitude proportionally to frequency and a 90°-phase member (23) are inserted into the signal path of the sum voltage (S) and
— the sum voltage (S') influenced in amplitude and phase and the difference voltage (D) are each applied to a respective one of the direction-finding voltage inputs of the visual direction-finding device.

2. Direction-finding arrangement according to claim 1, characterised thereby, that a frequency-dependent attenuating member (25) is provided for the amplitude member (22) and the phase member (23) and displays a power divider (16), which divides the sum voltage (S) into two equal signal components over two signal paths, a delay line (7), which corresponds to the spacing (b) of both the frame aerials (I, II) and is in one of the signal paths, as well as a difference member (8), which again combines both the signals components and supplies their difference as sum voltage (S') influenced in amplitude and shifted in phase through 90°, and that a by-pass line (9) of a length (b/2) corresponding to half the aerial spacing is arranged in the signal path of the difference voltage (D).

3. Direction-finding arrangement according to claim 1 or 2, characterised thereby, that a second double fram is present, both the frame aerials (III, IV) of which are oriented perpendicularly to the frame aerials (I, II) of the first double frame, and that the aerial voltages of both the frame aerials of this second double frame are likewise combined into a further sum voltage and a further difference voltage.

4. Direction-finding arrangement according to claim 3, characterised by switching means (11) for the selectable connection of one of the difference voltages to the visual direction-finding device.

5. Direction-finding arrangement according to claim 3 or 4, characterised by further switching means (12, 13, 14) for switching over to normal Watson-Watt direction-finding with the crossed double frames by direct connection of the sum voltage ($S_{I, II}$) of the first double frame and the second sum voltage ($S_{III, IV}$) formed from the aerial voltages of the individual aerials of the second double frame to the direction-finding voltage inputs of the visual direction-finding device.

6. Direction-finding arrangement according to one of the claims 1 to 5, characterised thereby, that the visual direction-finding device (24) displays an additional scale calibrated for the direction-finding with sum voltage and difference voltage of the double frame.

7. Direction-finding arrangement according to one of the claims 1 to 6, characterised thereby, that an auxiliary aerial voltage is present for the laterally unambiguous determination of the direction-finding angle.

**Revendications**

1. Agencement radiogoniométrique pour déterminer la direction selon laquelle une onde électromagnétique arrive sur un navire, comportant
— un appareil radiogoniométrique à visualisation (24) ayant deux entrées de tension de relèvement associées à des systèmes de déviation;
— un agencement d'antenne à double cadre constitué de deux antennes-cadres (I, II) montées fixes sur le navire, qui sont dirigées parallèlement l'une à l'autre et qui sont en vis-à-vis l'une de l'autre avec un intervalle prédéterminé;
— des dispositifs (5) pour combiner les tensions d'antenne des deux antennes-cadres en une tension de somme et une tension de différence;
caractérisé, par le fait que
— les deux antennes-cadres (I, II) sont orientées chacune perpendiculairement par rapport à l'axe longitudinal du navire, de sorte que l'agencement antenne-double cadre présente, pour ce qui est de son diagramme directionnel correspondant à la tension de somme (S) et correspondant à la tension de différence (D), un point zéro situé en permanence sur l'axe longitudinal du navire,
— un élément à phase de 90° (23) et un élément d'amplitude (22) influençant l'amplitude du signal proportionnellement à la fréquence sont insérés dans le trajet de signal de la tension de somme (S);
— la tension de somme (S') influencée en amplitude et en phase et la tension de différence (D) sont appliquées chacune à une entrée de tension de relèvement de l'appareil radiogoniométrique à visualisation.

2. Agencement radiogoniométrique selon revendication 1, caractérisé par le fait qu'il est prévu, pour l'élément d'amplitude (2) et l'élément de phase (3), un élément atténuateur (25) dépendant de la fréquence, lequel présente un diviseur de puissance (6) qui partage la tension de somme (S) en deux composantes de signal identiques, sur deux trajets de signaux, une ligne à retard (7) correspondant à l'intervalle (b) des deux antennes-cadres (I, II), située sur l'un des trajets de signaux, ainsi qu'un élément de différence (8) qui recombine les deux composantes de signal et fournit leur différence en tant que tension de somme (S') influencée en amplitude et déphasée de 90°, et par le fait qu'une ligne de détour (9) ayant une longueur (b/2) correspondant à la moitié de l'intervalle entre antennes est agencée sur le trajet de signal de la tension di différence (D).

3. Agencement radiogoniométrique selon revendication 1 ou 2, caractérisé par le fait qu'il y a un deuxième double-cadre dont les deux antennes-cadres (III, IV) sont orientées perpendiculairement aux antennes-cadres (I, II) du premier double cadre, et par le fait que les tensions d'antenne des deux antennes-cadres de ce deuxième double cadre sont également combinées en une autre tension de somme et une autre tension de différence.

4. Agencement radiogoniométrique selon revendication 3, caractérisé par des moyens de commutation (11) pour raccorder sélectivement l'une des deux tensions de différence à l'appareil radiogoniométrique à visualisation.

5. Agencement radiogoniométrique selon revendication 3 ou 4, caractérisé par d'autres moyens de commutation (12, 13, 14) pour la commutation sur relèvement normal selon Watson-Watt avec les doubles cadres croisés, par raccordement direct de la tension de somme ($S_{I,II}$) du premier double cadre et de la tension de somme ($S_{III,IV}$) formée à partir des tensions d'antenne des antennes individuelles du deuxième double cadre, aux entrées de relèvement de l'appareil radiogoniométrique à visualisation.

6. Agencement radiogoniométrique selon l'une des revendications 1 à 5, caractérisé par le fait que l'appareil à visualisation (24) présente une échelle supplémentaire étalonnée pour le relèvement avec tension de somme et de différence du double cadre.

7. Agencement radiogoniométrique selon l'une des revendications 1 à 6, caractérisé par le fait qu'une tension d'antenne auxiliaire est présente pour la détermination de l'angle de relèvement, avec lever de doute quant au côté.

FIG.1

FIG.2

FIG.3A

FIG.3B

FIG.5B

FIG.5A

FIG.4

FIG. 6

FIG. 7

FIG. 8

FIG. 9